Europäisches Patentamt

European Patent Office

Office européen des brevets

(19)

(11) **EP 1 359 444 A1**

(12) **EUROPEAN PATENT APPLICATION**

(43) Date of publication:
**05.11.2003 Bulletin 2003/45**

(51) Int Cl.[7]: **G02B 6/34**, G02B 6/12, H04J 14/02

(21) Application number: **02253113.1**

(22) Date of filing: **02.05.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **UNIVERSITY OF SOUTHAMPTON Southampton, Hampshire SO17 1BJ (GB)**

(72) Inventors:
 • **Riziotis, Christos, University of Southampton Southampton, Hampshire SO17 1BJ (GB)**
 • **Zervas, Mikhail N., University of Southampton Southampton, Hampshire SO17 1BJ (GB)**

(74) Representative: **Haines, Miles John et al D. Young & Co. 21 New Fetter Lane London EC4A 1DA (GB)**

(54) **Bragg grating assisted waveguide coupler optical add/drop multiplexer**

(57)    The invention provides a waveguide coupler optical add/drop multiplexer (OADM) in which the grating can be positioned within the coupling region of a wave guide coupler (48) so as to simultaneously provide fully optimised add and drop functions. The invention overcomes the limitations of the prior art half cycle coupler (HCC) OADMs in which add and drop functions cannot be simultaneously optimised by providing a waveguide coupler with two or more half cycles and carefully designing the grating (50) so that add and drop signals incident in opposite directions into the coupling region have effective reflection points ($M_1$,$M_2$) that coincide with different points along the coupling region at which the lowest order even and odd normal modes are $j\pi/2$ out of phase, where $j$ is an odd integer. It is therefore possible to provide a high specification OADM without optical circulators. The invention may find application in point-to-point links and optical networks.

Fig. 3a

Fig. 3b

Fig. 3c

**Description**

## BACKGROUND OF THE INVENTION

The invention relates to optical multiplexers and more especially but not exclusively to optical add/drop multiplexers for wavelength division multiplexing.

Optical add/drop multiplexers (OADMs) are key components for wavelength division multiplexing (WDM) in optical communication systems. Basic four-port devices that add and/or drop a particular WDM channel are going to be of great importance in future optical networks. OADMs can be used as simple components, which serve a single subscriber in a node of an optical network, or as building blocks of more complicated modules such as optical cross connects and switch matrices.

The unique spectral characteristics of Bragg gratings mean they offer promising solutions for the design of OADMs and a number of grating based four-port OADM configurations have been proposed. The simplest makes direct use of the reflection properties of a Bragg grating in a single mode fibre in combination with two optical circulators [1]. This OADM implementation is frequently seen as a benchmark OADM in that it provides excellent cross-talk performance and negligible back reflections. However, the configuration suffers from relatively high insertion losses (~1dB), is bulky and expensive, and cannot easily be integrated.

More compact grating-based OADM configurations have also been proposed which do not include optical circulators. These types of OADM can generally be classified in to one of two groups, interferometric or non-interferometric. The most common interferometric device used in this context is the Mach-Zehnder interferometer (MZI) OADM [2-6]. A perfectly matched MZI OADM (i.e. with identical gratings in each arm) can potentially result in ideal performance, better even than optical circulator based OADMs. They show no back reflections, require no additional components, provide relatively low insertion losses (~0.1dB) and can be readily integrated. However, grating mismatches and interferometer-arm imperfections severely compromise the performance of MZI OADMs and result in strong back reflections and spectral distortion. To alleviate these problems careful post-processing and trimming of the written gratings is required [6]. Nonetheless, it is still likely that optical isolators will be required at the two input ports to avoid the residual deleterious effects of back reflections. This makes the total component count of realistic MZI OADMs equal to that of optical circulator based devices.

Waveguide coupler OADMs based on fibre half-cycle couplers (HCC) have been proposed as an alternative to MZI OADMs, since they provide significantly relaxed geometric constraints. The interference effect in an MZI device occurs between different waveguides. This means that an imbalance between the arms on the order of only a wavelength of light will significantly degrade the performance of the device. In a waveguide coupler OADM however, since the interference arises from beating between the lowest order even and odd normal modes of a single waveguide, a much larger imbalance, on the order of the entire coupling length of the waveguide, must occur to create comparable levels of degradation.

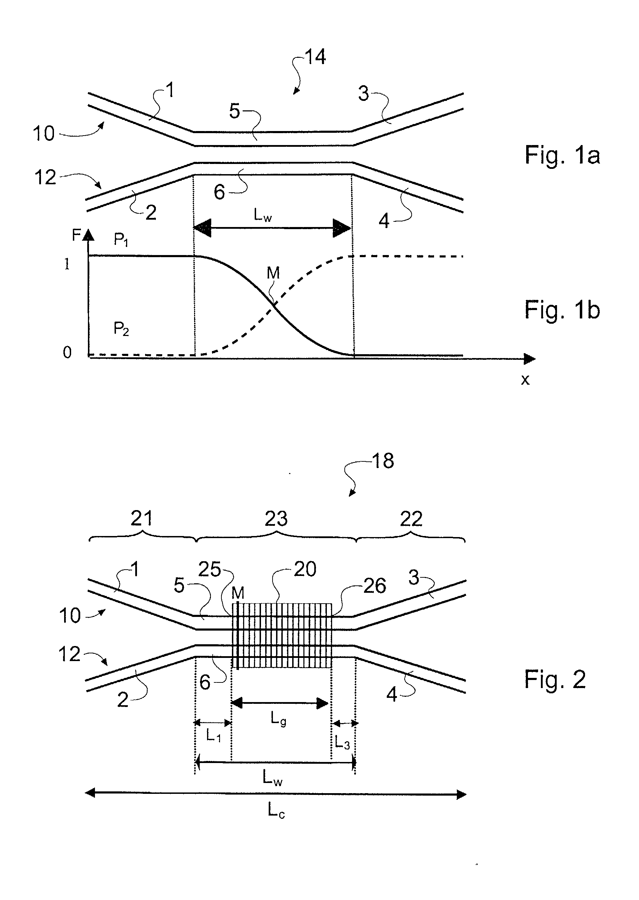

Figure 1a schematically shows a conventional fibre half-cycle coupler 14. The coupler 14 comprises a first fibre 10 and a second fibre 12. The first fibre 10 comprises a first end port 1, a central portion 5 and a second end port 3. The second fibre 12 comprises a first end port 2, a central portion 6 and a second end port 4. The ports 1-4 are used to link the coupler to external components and the central portions 5, 6, while schematically shown separately, are fused together and span a length $L_w$.

Figure 1b is a graph schematically representing the idealised power evolution of an optical signal which is launched into port 1 of the coupler 14 shown in Figure 1a. The solid line shows the fraction of the total power $P_1$ in the first fibre 10 as a function of position x along the fibre. The dotted line similarly shows the fraction of the total power $P_2$ in the second fibre 12. In these idealised power evolution curves there are assumed to be no losses along the fibre and negligible power coupled outside of the fused central region. The coupler 14 is a known as a full coupler since it is designed to couple all of the signal power from port 1 to port 4. At the mid-point M of the coupler, the power in each of the fibres 10, 12 is equal.

Figure 2 schematically shows a conventional HCC OADM 18. It is formed by writing a Bragg grating 20 into the coupling region of a host HCC such as the one shown in Figure 1a [7]. The Bragg grating 20 is designed to reflect at a wavelength of $\lambda_1^{BG}$. Those features of Figure 2 which are functionally similar to the corresponding features of the host coupler shown in Figure 1a are given the same reference numeral and will be understood form the above. The first ports 1, 2 of the two fibres 10, 12 collectively form a first tapered region 21, the second ports 3, 4 collectively form a second tapered region 22 and the central portions 5, 6 collectively form a uniform waist region 23. The grating 20 has a length $L_g$ and is located within the coupling or waist region 23 offset from the mid-point M such that the distance from the first tapered region 21 to a first end 25 of the grating 20 is $L_1$ and the distance from the second tapered region 22 to a second end 26 of the grating 20 is $L_3$, as indicated in Figure 2.

Analysis and modelling of coupler OADM devices can be performed by decomposing the propagating fields into the even and odd normal modes of the host coupler, and calculating the interference between them. Symmetry considerations guarantee that these modes do not cross-couple energy by scattering from the grating (assuming that the grating is written perpendicular to and placed symmetrically with respect to the host coupler's longitudinal axis). The total length of the HCC OADM coupler 18 shown in Figure 2 is $L_c=Z_c/2$, where $Z_c$ is the beat length between the lowest order even and odd normal modes of the host coupler. If $n_e$ and $n_o$ are the effective refractive indices of these even and odd modes respectively, the beat length at wavelength $\lambda$ is given by $Z_c=\lambda/(n_e-n_o)$.

As a stream of WDM channels is presented to port 1 of the OADM coupler 18, the channel at wavelength $\lambda_1^{BG}$ will interact with the grating 20 and be strongly reflected. The grating 20 is written into the waist region 23 such that the effective reflection point at $\lambda_1^{BG}$ for a signal entering via port 1 coincides with the mid-point M of the OADM. The effective reflection point of a grating defines the effective penetration depth which results from a grating being a distributed reflector. A true specular reflector, such as an idealised mirror, has a zero penetration depth since reflection is considered to occur entirely at the surface of the reflector. However, the distributed nature of the reflection within a fibre grating means that different components of the reflected signal are effectively reflected from different depths within the grating. The net effect is to add a time delay to the reflected signal which, in combination with the mean propagation velocity c within the grating, defines the effective penetration depth $L_p = 0.5 \cdot c . \tau$. The penetration depth is the distance from the front surface of the grating to the point at which a specular reflection would provide the same time delay $\tau$, and this point is known as the effective reflection point. At the mid-point of the OADM, the lowest order even and odd normal modes of the host coupler are $\pi/2$ out of phase and the reflected signals accordingly develop a relative phase difference of $\pi$ on return to the OADM input. This ensures that these even and odd normal modes destructively interfere at port 1, and that all of the power at $\lambda_1^{BG}$ appears at port 2. The WDM channel at $\lambda_1^{BG}$ has been separated from the stream of WDM channels presented at port 1 and the remaining WDM channels exit the coupler at port 4. Since the even and odd modes of the host coupler have different propagation constants, their reflection spectra from the grating 20 are spectrally displaced and only partially overlapping. The useable bandwidth of the dropped channel is determined by this overlap.

A major disadvantage of the conventional coupler OADM arises from the asymmetric placement of the grating 20. When arranged to efficiently drop a channel, a replacement channel cannot be added to the ongoing WDM stream by making efficient use of reflection from the other end of the grating 20. If a replacement channel at $\lambda_1^{BG}$ is presented to port 3 for addition to the WDM stream, the lowest order even and odd modes of the coupler are again reflected by the grating 20 but this reflection does not occur at the mid-point of the OADM and the replacement channel will not be efficiently added to the on-going stream at port 4. The non-centralised reflection point prevents the full destructive interference at port 3 (and corresponding full constructive interference at port 4) necessary to optimise the adding of the replacement channel to the WDM stream.

A fibre grating OADM is known that is based on a full-cycle host coupler [14]. The device relies on the non-evanescent coupling between a pair of dissimilar fibres which arises from a grating inclined to the longitudinal axis of the host coupler. This arrangement is not symmetric about its mid point, and as such acts differently to add and drop signals which, by definition, are incident in opposite directions.

Conventional devices are therefore unable to simultaneously provide optimised add and drop actions [8]. If the add action is optimised, the drop action is necessarily compromised, conversely if the drop action is optimised, the add action is necessarily compromised [9]. Accordingly, there is a need in the art for a waveguide coupler OADM which can provide optimised add and drop actions simultaneously.

## SUMMARY OF THE INVENTION

The present invention provides a waveguide coupler OADM in which the grating can be positioned within the coupling region of a waveguide coupler so as to simultaneously provide fully optimised add and drop functions.

According to the invention there is provided an optical add drop multiplexer (OADM) comprising a waveguide coupler with at least four ports interconnected by a coupling region, wherein the coupling region has a length corresponding to the lowest order even and odd normal modes of the waveguide coupler developing a phase difference sufficient to provide at least first and second points at which the lowest order even and odd normal modes are $j\pi/2$ out of phase, where $j$ is an odd integer, and wherein a Bragg grating is incorporated in the coupling region across the at least first and second points so that add and drop signals inserted into the waveguide coupler in opposed directions are reflected at or about respective ones of the at least first and second points.

The invention overcomes the limitations of the prior art HCC OADMs in which add and drop functions cannot be simultaneously optimised. This is achieved by providing a waveguide coupler with multiple half cycles and carefully designing the grating so that add and drop signals incident in opposite directions into the coupling region have effective reflection points that coincide with different points along the coupling region at which the lowest order even and odd normal modes are $j\pi/2$ out of phase. With the proposed multiple half cycle coupler (MHCC) OADM it is possible to optimise the add and drop functions simultaneously by separation of the reflections associated with the add and drop functions into separate points along the coupling region at which the lowest order even and odd normal modes are $j\pi/$

2 out of phase. It is therefore possible to provide a waveguide coupler based OADM without optical circulators that has performance comparable to OADMs that use circulators. The need for bulky and costly optical circulators to obtain high performance is thus eliminated.

The Bragg grating is preferably arranged centrally with respect to the coupling region and is also preferably confined to the coupling region.

In some embodiments, the Bragg grating may include apodisation, although in other embodiments no apodisation is provided. If provided, the apodisation may have a sine form or a raised cosine form. Other forms are also possible, such as hyperbolic tangent. Typically apodisation will be provided symmetrically at each end of the grating, but this will not necessarily always be the case.

In general, implementations of the invention will ensure that the length of the coupling region corresponds to the lowest order even and odd normal modes of the coupler developing a phase difference of at least $m\pi$ along the length of the coupling region, where m is an integer of at least two, so as to provide m points at which the lowest order even and odd normal modes are $j\pi/2$ out of phase. The integer value m is equal to one of 2, 3, 4, 5, 6, 7, 8, 9 and 10 in specific examples.

The OADM may be implemented in a variety of waveguide technologies, most notably in optical fibre and planar waveguide technology.

In one group of embodiments, the waveguide coupler is implemented with at least first and second optical fibres and the coupling region is formed by fusing the at least first and second optical fibres.

In another group of embodiments, the waveguide coupler is implemented on a planar substrate with at least first and second planar waveguides and the coupling region is formed by the at least first and second planar waveguides extending alongside one another.

The invention further provides an optical transmission system including at least one optical add drop multiplexer as claimed. The optical transmission system may be a link interconnecting a WDM transmitter and receiver (or transceivers). Several OADMs may be used to allow for dropping and/or adding of more than one WDM channel.

The invention further provides an optical network including at least one optical add drop multiplexer as claimed. The network may be a ring network or other configuration network, such as a mesh, in which OADMs are used to add and/or drop subscriber channels.


## BRIEF DESCRIPTION OF THE DRAWINGS

For a better understanding of the invention and to show how the same may be carried into effect, reference is now made by way of example to the accompanying drawings in which:

Figure 1a is a schematic diagram showing a half-cycle coupler of the prior art;

Figure 1b is a graph schematically showing the power evolution along the length of the half-cycle coupler shown in Figure 1a;

Figure 2 is a schematic diagram showing a half-cycle coupler optical add/drop multiplexer of the prior art;

Figure 3a is a schematic diagram showing a full-cycle coupler optical add/drop multiplexer according to a first embodiment of the invention;

Figure 3b is a graph schematically showing the power evolution along the length of the full-cycle coupler optical add/drop multiplexer shown in Figure 3a;

Figure 3c shows even and odd normal modes along the full-cycle coupler optical add/drop multiplexer shown in Figure 3a;

Figure 4 is a graph schematically showing the power evolution along the length of a two-and-a-half-cycle coupler according to a second embodiment of the invention;

Figure 5 is a graph schematically showing the relationship between reflectivity and penetration slope of three Bragg grating of different apodisation profile;

Figure 6 is a flow diagram schematically showing a design algorithm for determining the optimum grating characteristics to match a given host coupler and performance requirements for providing an optical add/drop multiplexer according to an embodiment of the invention;

Figure 7 is a graph schematically showing the full spectral response of a half-cycle coupler of the prior art;

Figure 8 is a graph schematically showing the input reflectivity of a half-cycle coupler of the prior art in different configurations;

Figure 9 is a graph schematically showing the full spectral response of a full-cycle coupler according to an embodiment of the invention;

Figure 10 is a graph schematically showing the full spectral response of another full-cycle coupler according to an embodiment of the invention;

Figure 11 is a graph schematically showing the full spectral response of another full-cycle coupler according to an embodiment of the invention but with non-optimal design;

Figure 12 is a graph schematically showing the full spectral response of another full-cycle coupler according to an embodiment of the invention but with non-optimal design;

Figure 13 is a graph schematically showing the input reflectivity of a half-cycle coupler of the prior art in different configurations and also the input reflectivity of a full-cycle coupler according to an embodiment of the invention;

Figure 14 is a graph schematically showing the input reflectivity of another half-cycle coupler of the prior art in different configurations and also the input reflectivity of a full-cycle coupler according to an embodiment of the invention;

Figure 15a is a schematic representation of a switchable optical add/drop multiplexer function;

Figure 15b is a schematic representation of a two-stage cascade optical add/drop multiplexer function;

Figure 16 is a graph schematically showing the eye-opening penalty as a function of grating - signal spectrum misalignment in a single action of different configurations of a half-cycle optical add/drop multiplexer of the prior art;

Figure 17 is a graph schematically showing the eye-opening penalty as a function of grating - signal spectrum misalignment in a two-stage cascade action of different configurations of a half-cycle optical add/drop multiplexer of the prior art;

Figure 18 is a graph schematically showing the eye-opening penalty as a function of number of cascaded actions for a number of optical add/drop multiplexers;

Figure 19 is a graph schematically showing the dispersion as a function of wavelength of the gratings deployed in a full-cycle and half-cycle optical add/drop multiplexer, also shown are the dispersion of the optical add/drop multiplexers themselves;

Figure 20 is a graph schematically showing the total insertion loss as a function of number of cascaded actions for a number of optical add/drop multiplexers;

Figure 21 is a graph schematically showing the eye-opening penalty as a function of grating - signal spectrum misalignment for single and two-stage cascade actions of a full-cycle optical add/drop multiplexer according to an embodiment of the invention;

Figure 22 is a graph schematically showing the eye-opening penalty as a function of grating - signal spectrum misalignment for a two-stage cascade action of a full-cycle optical add/drop multiplexer according to an embodiment of the invention and different configurations of a half-cycle optical add/drop multiplexer of the prior art;

Figure 23 is a graph schematically showing the eye-opening penalty as a function of number of cascaded actions for a full-cycle optical add/drop multiplexer according to an embodiment of the invention and different configurations of a half-cycle optical add/drop multiplexer of the prior art;

Figure 24a shows an OADM in a point to point link; and

Figure 24b shows OADMs in an optical network.

## DETAILED DESCRIPTION

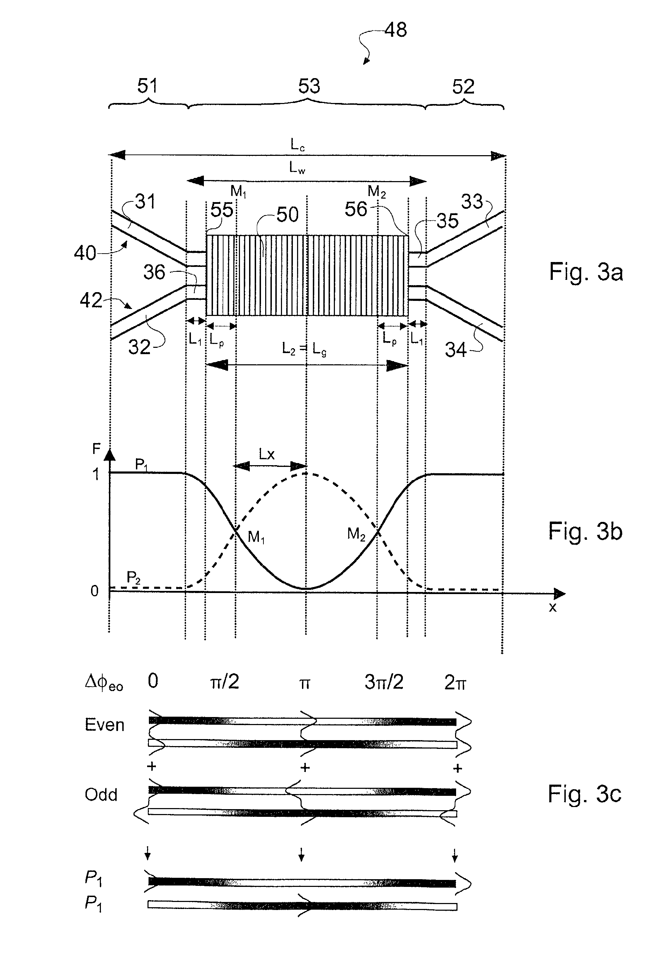

Figure 3a schematically shows an OADM 48 according to a first embodiment of the invention which is based on a full-cycle (FCC) full coupler. The FCC OADM 48 comprises a first waveguide 40 and a second waveguide 42. The first waveguide 40 comprises a first end port 31, a central portion 35 and a second end port 33. The second waveguide 42 comprises a first end port 32, a central portion 36 and a second end port 34. The ports 31-34 are used to link the FCC OADM 48 to external components and the central portions 35, 36. The first and second waveguides may be formed from optical fibres which are fused over a length $L_w$ to form a coupling or waist region 53. The first ports 31, 32 of the two waveguides 40, 42 collectively form a first tapered region 51, the second ports 33, 34 collectively form a second tapered region 52 and the central portions 35, 36 collectively form the coupling region 53. A Bragg grating 50 is written into the coupling region 53. The grating 50 is designed to reflect at a wavelength $\lambda_1^{BG}$, has a length $L_g$ and is located centrally within the coupling region 53. (This contrasts from the conventional HCC OADM design described in the introduction.)

Figure 3b is a graph schematically representing the power evolution of an optical signal at a wavelength far from $\lambda_1^{BG}$ which is launched into port 31 of the FCC OADM 48. The solid line $P_1$ shows the fraction of the total power in the first waveguide 40 as a function of position x along the waveguide 40. The dotted line similarly shows the fraction of the total power $P_2$ in the second waveguide 42. In these idealised power evolution curves there are assumed to be no losses along the waveguides 40, 42 and negligible power coupled outside of the waist region 53. Because the OADM 48 is based on a full-cycle coupler, the power evolution is different to that shown in Figure 1b. The power in each of the waveguides 40, 42 is now equal at two points within the waist region 53, marked $M_1$ and $M_2$ in Figures 3a and 3b. These are the points at which the lowest order even and odd normal modes of the coupler are $j\pi/2$ out of phase, where, for optical signals incident from the left, $j$ is 1 and 3 for $M_1$ and $M_2$ respectively.

Figure 3c shows in the upper two traces the evolution of the lowest order even and odd normal modes along the FCC OADM 48 and in the lower trace the power evolution between the first and second waveguides along the coupling region as a function of propagation over a full cycle of $2\pi$ of the phase shift between these even and odd modes $\Delta\phi_{eo}$. The terms 'even' and 'odd' are used hereinafter to refer to the lowest order even and odd mode respectively.

In this novel configuration, the OADM 48 length $L_c$ is equal to the effective even-odd normal mode beat length $Z_c$ at the operating wavelength $\lambda_1{}^{BG}$. Ideally the tapered regions 51, 52 do not contribute to the coupling and the even-odd mode beating develops uniformly over the coupling region 53. If point reflectors were deployed at the 3dB points $M_1$, $M_2$ of the OADM 48, the device would simultaneously give optimised add and drop actions. In the real case of an integrated fibre or planar waveguide device where point reflectors cannot be used an extended reflector in the form of a Bragg grating 50 is deployed within the host coupler.

For the device to be operable to a commercially satisfactory specification, the coupler in general and the grating in particular must have suitable characteristics to ensure that the effective reflection points of the optical signal coming from opposed directions into the device (left and right sides as viewed in the figure) are coincident with the mid-points $M_1$ and $M_2$ respectively. How to obtain a parameter set capable of fulfilling these design constraints is described further below. This is not straightforward. Moreover, prior to obtaining the solution, it was not known whether the problem was in fact insoluble.

For a full-cycle coupler OADM to operate optimally and symmetrically for both add and drop actions, it must be carefully designed to match the above geometric requirements. A methodology is presented in the following for the generalised design of suitable Bragg gratings for any full-cycle coupler OADM such as shown in Figure 3a. The method provides the optimum length and refractive index modulation, for a given grating reflectivity and apodisation profile, so as to match the geometrical characteristics of a given full-cycle host coupler.

The derivation of the design method is based on the geometrical characteristics of the arrangement of the grating within the coupling region. With reference to Figure 3a, we derive relations for the grating penetration slope $a$, defined as $a = L_p/L_g$, where $L_p$ is the penetration depth at the design Bragg wavelength $\lambda_1{}^{BG}$, and $L_g$ is the grating length. These parameters determine the minimum required grating reflectivity, since if the grating reflectivity is too low, the grating will become too long to fit into the coupling region 53. This is important, since the grating 50 should be restricted to the coupling region 53 (of length $L_w$), which has uniform properties, and should not extend into the tapered regions 51, 52, since this can severely deteriorate the OADM performance.

By limiting the grating to the waist region 53, and, as an example, considering a simplified case where the host coupler characteristics determine that the separation of the points $M_1$ and $M_2$ shown in Figures 3a and 3b is equal to half of the length $L_w$ of the waist region 53, we can provide a 'geometrical' relation between the grating and the host coupler. If the coupling occurs uniformly, and only within the waist region 53, the length of the waist region is equal to $L_w \cong 4L_x$ where $L_x$ is the length corresponding to $\pi/2$ phase difference between the even and odd normal modes at the coupler waist and $L_w$ is the length corresponding to a full cycle, i.e. a $2\pi$ phase difference between the even and odd normal modes. We can now write (see Figures 3a and 3b):

$$L_g \cong 2aL_g + \frac{L_w}{2} \qquad (1)$$

And, since we require $L_g \leq L_w$, we obtain a limiting relation for the penetration slope $a$, namely:

$$L_g \cong \frac{L_w}{2(1-2a)} \leq L_w \Rightarrow a \leq 0.25 \qquad (2)$$

In terms of the actual $\pi/2$ beat length $L_x$ rather than waist length $L_w$, we can form an exact relation for the grating length:

$$L_g = 2aL_g + 2L_x \Rightarrow L_g = \frac{2L_x}{(1-2a)} \qquad (3)$$

In addition to the FCC OADM 48 configuration, the invention can also be performed with a higher order multiple-half-cycle coupler OADMs.

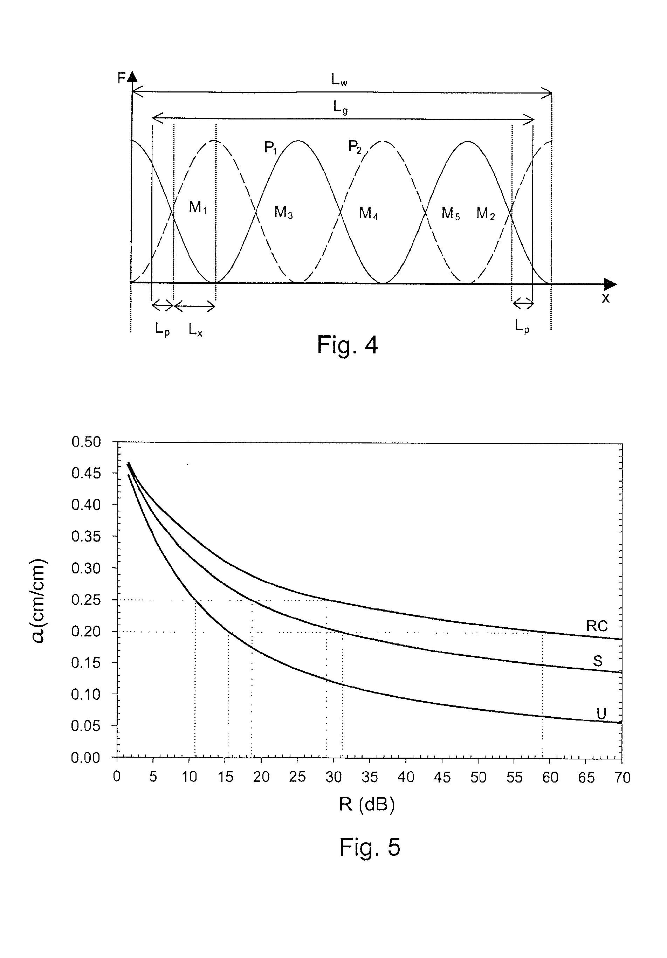

Figure 4 shows a graph which schematically represents the idealised power evolution of an optical signal along a multiple-half-cycle (full) coupler optical add/drop multiplexer (MHCC OADM) in the form of a 5/2-cycle coupler according to a second embodiment. The solid line shows the power fraction $P_1$ of the total power in a first waveguide comprising the MHCC OADM as a function of position x along the first waveguide. The dotted line similarly shows the fraction of the total power $P_2$ along a second waveguide comprising the MHCC OADM. In these idealised power evolution curves there are assumed to be no losses along the waveguides and negligible power coupled outside of the waist region. In this example, a symmetric grating which is deployed so as to provide effective reflection points at $M_1$ and $M_2$ would simultaneously provide optimised add and drop actions in a manner similar to the FCC OADM 48 described above. Additionally, a grating which is deployed to provide effective reflection points at any pair of the points marked $M_{1-5}$ in Figure 4 (e.g. $M_3$ and $M_2$) could also provide optimised add and drop actions, though with some pairings (e.g. $M_1$ and $M_4$) the add and drop channels would be delayed by different amounts within the coupler. The points $M_1$, $M_3$, $M_4$, $M_5$ and $M_2$ are the points at which the lowest order even and odd normal modes of the 5/2-cycle coupler are $j\pi/2$ out of phase, where, for optical signals incident from the left, $j$ is 1, 3, 5, 7 and 9 respectively.

We can generalise the derivation given above to the case of a multiple half-cycle coupler OADM. We concentrate on the design rules necessary to obtain reflection at the left-most and right-most crossover points (i.e. $M_1$ and $M_2$ in the 5/2-cycle coupler example shown in Figure 4) and in this case, the grating length can be expressed as:

$$L_g = 2L_p + (2m - 2)L_x \tag{4}$$

where m is the number of half-cycles. Given that $L_p = a \cdot L_g$, we obtain the exact relation:

$$L_g = \frac{2m - 2}{1 - 2a} L_x \tag{5}$$

which will be referred as the "*Grating Length Equation*", it relates the grating length to its own characteristics (through a) as well as the coupler characteristics (through $L_x$ and m). A corresponding relationship for pairings other than the left-most and right-most crossover points also be formed.

If we again consider the contribution of the tapered regions to the coupling process to be negligible (as illustrated in Figure 4), we can relate the $\pi/2$ beat length $L_x$ of the multiple half-cycle coupler to the length of the waist region $L_w$ via:

$$L_x = \frac{L_w}{2m} \tag{6}$$

Substituting this into Equation 4 above, we find

$$L_g = 2aL_g + \frac{2m\text{-}2}{2m}L_w \Rightarrow L_g = \frac{2m\text{-}2}{(1\text{-}2a)2m}L_w \tag{7}$$

Again imposing the limitation that the grating may only be written into the waist region ($L_g \leq L_w$), this results in:

$$\frac{2m\text{-}2}{2(1\text{-}2a)m}L_w \leq L_w \Rightarrow \frac{2m\text{-}2}{2(1\text{-}2a)m} \leq 1 \Rightarrow a \leq \frac{1}{2m} \tag{8}$$

If we substitute m=2 into the above, we recover the result for the full-cycle coupler given by Equation 2.

In addition to the equations which detail the geometrical relationship between the grating and the host coupler, the functional behaviour of different types of Bragg grating must also be considered to determine the exact grating parameters necessary to match the host coupler characteristics. We now introduce generic engineering design curves for Bragg gratings which relate their penetration slope to their reflectivity for specific apodisation profiles.

Figure 5 is a graph representing general engineering design curves relating penetration slope *a* and reflectivity R for three different representative gratings, a uniform (non-apodised) grating, a sine apodised grating and a raised cosine apodised grating, labelled U, S and RC respectively. The nature of different grating apodisation functions is known in the art [13].

The significance of the 'Grating Length Equation' is greatly enhanced by the fact that the penetration slope *a* of a grating with a specified apodisation profile is uniquely related to its reflectivity R. This allows a general relation between a grating's spectral characteristics and the grating-coupler geometrical relation for different OADM configurations to be established.

The geometrical limitation imposed on the penetration slope given by Equation 8 can be used in conjunction with the engineering curves presented in Figure 5 to determine the minimum allowable reflectivity for a grating of a specific apodisation profile. If, for example, a grating is deployed for which the reflectivity is too low, the penetration depth $L_p$ will be too large for the grating to fit within the host coupler waist region. In conventional HCC OADMs, the penetration slope limitation is not an issue since the penetration depth of any grating will never exceed half of the grating length (*a* tends to 0.5 for very weak gratings).

Turning again to the FCC OADM 48, the deployed grating should exhibit a penetration slope *a* less than the 0.25 upper limit prescribed by Equation 2. In the limiting case of *a*=0.25, the grating 50 spans the entire host coupler waist region 53. In order to reduce the effects of the taper regions, it is more appropriate to select a slightly lower upper limit for the penetration slope *a* so that Lg is appreciably less than $L_w$. For example, for a more reasonable waist region coverage from the grating 50 a value of about $a \sim 0.2$ might be set.

With *a* = 0.2, the curves shown in Figure 5 suggest minimum reflectivities for the different apodisation profiles of approximately 15 dB, 31dB and 60 dB for uniform, sine and raised cosine profiles respectively. (Strictly speaking, the term transmissivity should be used rather than reflectivity, and negative dB values should be given. However, following common usage in the art, we refer to reflectivities and give positive dB values.) The deployment of increasingly higher order apodisation profiles to suppress the dispersion effects of the grating therefore requires increasingly stronger (i.e. higher reflectivity) gratings. This in turn increases dispersion effects, and a compromise must be made.

A suitable value of *a* can be established more rigorously if the exact shape of the coupling region, the power evolution along the coupler and the effect of the tapered regions are known. For example, they might be measured using nondestructive coupler characterisation techniques [11].

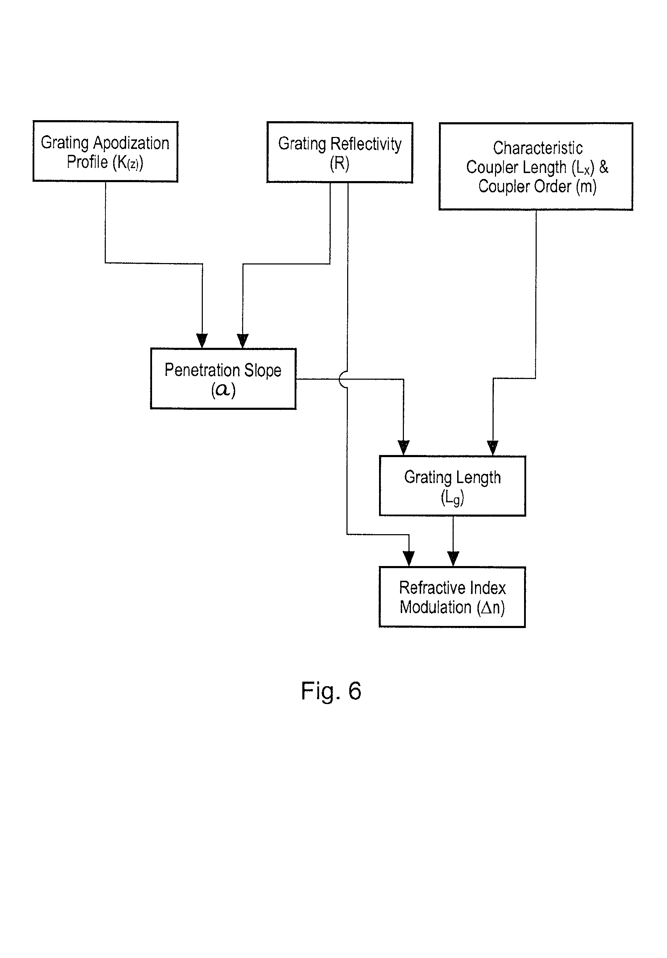

Figure 6 is a flow chart showing a suitable design algorithm for determining the optimised grating parameters for an OADM designed to satisfy particular criteria. In this case, the inputs to the design algorithm are the grating apodisation profile, K(z), chosen to provide the required dispersive properties of the OADM, the grating reflectivity, R, chosen to provide the required channel separation, and the characteristic parameters of the host coupler, namely $\pi/$2-beat length, $L_x$, and coupler order, m, into which the grating is to be written. With reference to Figure 5, the chosen apodisation profile K(z), and value of reflectivity R combine to provide a unique value for the penetration slope *a*. The penetration slope value *a*, and coupler parameters $L_x$ and m are combined via the Grating Length Equation to provide a value for the grating length $L_g$. Finally, the grating length value $L_g$ in combination with the reflectivity value R are used to determine the necessary magnitude for the refractive index modulation $\Delta n$ of the grating. All of the necessary parameters for the grating to match the geometrical requirements of the host coupler are thus calculable.

To demonstrate the benefits of the present invention, direct comparison will be made between the characteristics of a conventional half-cycle coupler optical add/drop multiplexer (HCC OADM) such as is shown in Figure 2, and a full-cycle coupler optical add/drop multiplexer (FCC OADM) according to the present invention, such as shown in Figure 3a.

We first consider the response of a specific HCC OADM. With reference to Figure 2, the length of the HCC OADM 18 is $L_c \approx 20$mm and the length of the waist region 23 is $L_w = L_1 + L_g + L_3 \approx 9.6$ mm. The deployed Bragg grating 20 has a sine apodisation profile, a length of 4.5 mm and refractive index modulation $10^{-3}$(p-p). The grating exhibits reflectivity $\sim 45$ dB and 3dB bandwidth $\sim 1$nm. The penetration depth (the distance from the first grating end 25 to the effective reflection point) at the central operating wavelength of 1.55 $\mu$m is calculated to be 762 $\mu$m.

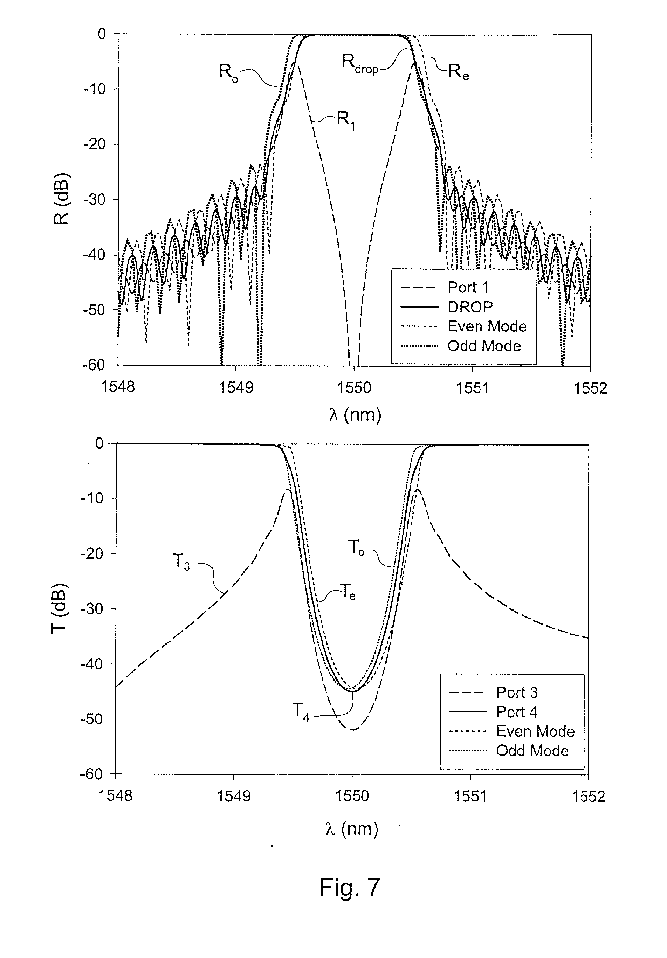

Figure 7 shows the full spectral response of the HCC OADM 18 described above in an optimised drop action configuration. In the upper panel, the reflected signal seen at port 1, the reflected signal seen at the drop port 2, the grating reflectivity of the even mode and the grating reflectivity of the odd mode are shown and labelled $R_1$, $R_{drop}$, $R_e$ and $R_o$ respectively. In the lower panel, the transmitted signal seen at port 3, the transmitted signal seen at port 4, the grating transmission of the even mode and the grating transmission of the odd mode are shown and labelled $T_3$, $T_4$, $T_e$ and $T_o$ respectively. The reflection and transmission spectra of the even and odd modes are centred at wavelengths $\lambda_e$ and $\lambda_o$ respectively. The relative spectral displacement is given by:

$$\Delta\lambda = |\lambda_e - \lambda_o| = 2 \cdot (n_e - n_o) \cdot \Lambda_o = \frac{2 \cdot \lambda \cdot \Lambda_o}{Z_c} \tag{9}$$

where $\Lambda_o$ is the period of the grating 20.

For optimised drop action, such as shown in Figure 2, the grating 20 is arranged so that its effective reflection point at $\lambda_1^{BG}$ coincides with M and the HCC OADM drops efficiently at this wavelength. When the device is optimised for channel dropping at port 2, the channel adding at port 3 is severely degraded. For simultaneous add and drop function, the device could be configured in a symmetrical manner by placing the Bragg grating at the centre of the coupler waist ($L_1 = L_3$). The device would then exhibit identical, but seriously compromised add and drop actions.

Despite the fact that the grating response is symmetric, the HCC OADM response is different under add and drop functions depending on the relative grating position. In the configuration shown in Figure 2, the drop action is optimised by placing the grating inside the waist region asymmetrically with respect to the mid-point such that $L_1+L_p=L_w/2$. In this configuration, the add action is degraded due to the fact that the effective reflection point on this grating side is well away from the waist mid-point. If the grating were placed symmetrically around the mid-point then neither effective reflection point would coincide with M. The symmetry of such a configuration provides identical although compromised add and drop actions.

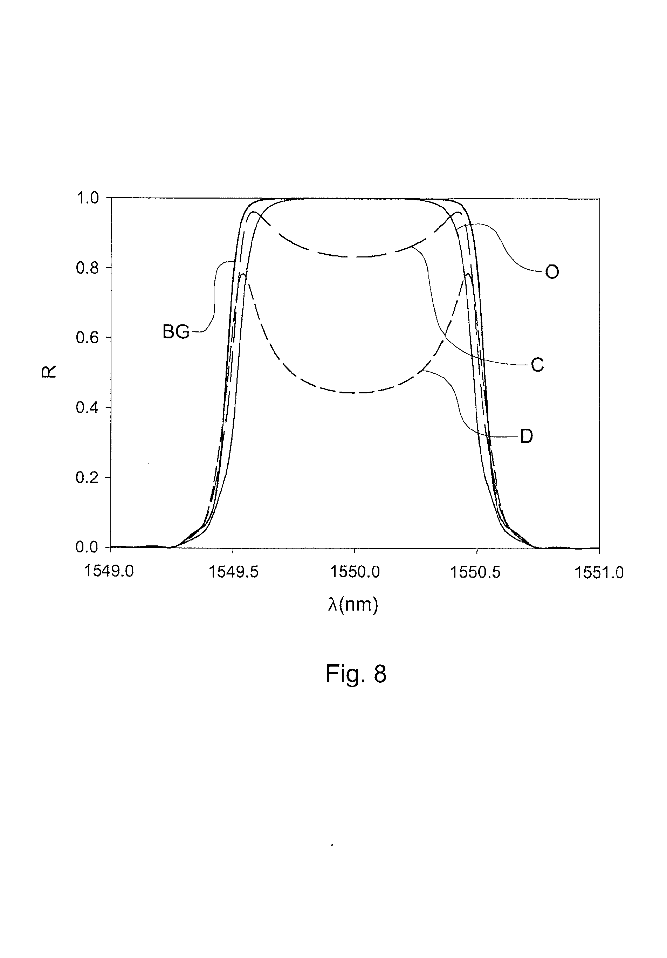

Figure 8 shows the typical signal R reflected to the drop port as a function of wavelength $\lambda$ for the optimised, degraded and compromised actions, labelled O, D and C respectively, which arise from the different configurations of an otherwise similar HCC OADM. Also shown, labelled BG, is the reflectivity spectrum of the deployed grating.

The deployment of conventional OADMs, such as shown above, in a WDM transmission system or in a network topology will clearly lead to system performance degradation, especially when cascades and misalignments between the grating and signal spectra are considered [9]. The concatenation of OADMs with even slightly degraded add/drop spectral characteristics leads to signal distortion and excessive eye-opening penalty (EOP), when the OADM's bandwidth utilisation by the transmitting signals' spectrum is very high. Additional to the distortion-induced loss, the non-optimised spectral response of the HCC OADM leads to significant signal attenuation (as shown in Figure 8) and consequently to excess loss. This loss is accumulated in the case of cascaded OADMs, leading to an additional loss for the systems' power budget. These effects are described in more detail further below.

Having demonstrated the non-optimal performance of a conventional HCC OADM, we now turn to the performance characteristics of a FCC OADM according to one embodiment of the invention.

We consider a full-cycle full coupler OADM with the same Bragg grating as deployed in the construction of the HCC OADM discussed above. By employing the same Bragg grating in a properly designed full-cycle coupler, a symmetric and fully optimised OADM can be achieved. From the length (4.5 mm) and the penetration depth (762 $\mu$m) of the grating discussed above, the required $L_x$ parameter of the hosting full-cycle coupler is back-calculated from the Grating Length Equation to be $L_x$=1.485mm. Based on this, we design a host coupler with a uniform waist length of 4.54 mm and place the grating in the centre of the new full-cycle coupler waist to form the OADM.

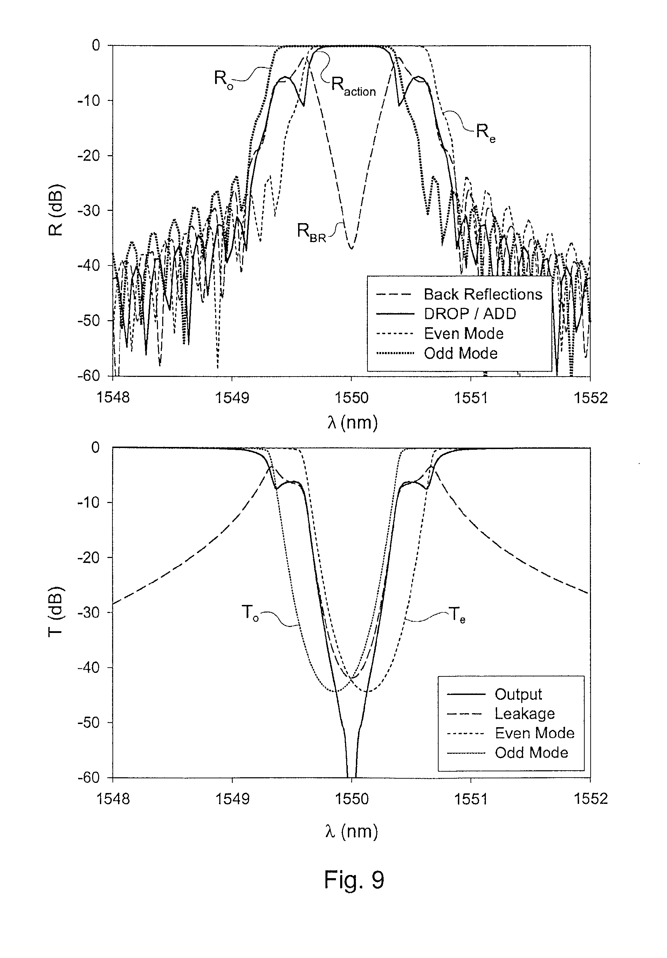

Figure 9 shows the full spectral response of an FCC OADM of the type shown in Figure 3a and with the parameters described above. The response of the simultaneous add and drop actions are identical. In the upper panel, the back-reflected spectrum for each action, the response spectrum of the action itself, the grating reflectivity of the even mode and the grating reflectivity of the odd mode are shown and labelled $R_{BR}$, $R_{action}$, $R_e$ and $R_o$ respectively. In the lower panel, output, leakage, even mode and odd mode transmission curves are shown.

With this FCC OADM configuration, the add and drop actions both exhibit a flat-top spectral response. We again see that dispersion effects lead to considerable back reflections at the input. The 3dB bandwidth of the drop/add action is now 0.7 nm and this implies a lower bandwidth utilisation factor than with the HCC OADM.

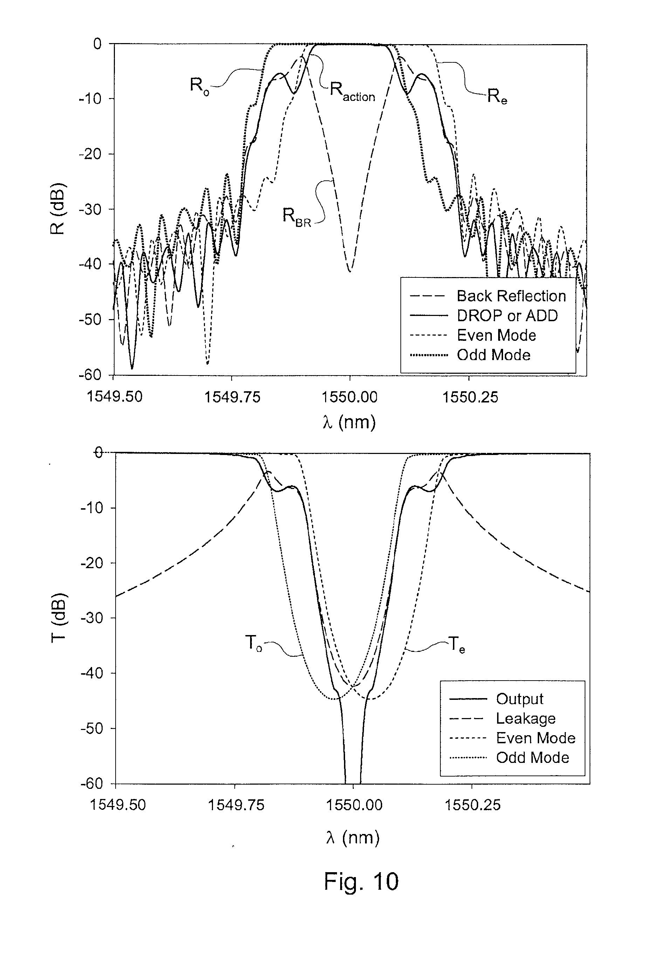

For comparison and instructive reasons, we consider a second optimised full-cycle OADM device. In this example we extend the length of the original HCC OADM host coupler to form a new FCC OADM host coupler and design a suitable grating, whereas in the previous FCC OADM, a suitable host coupler was designed to match a given grating. The length of the waist region is $\sim$20.7 mm and the $\pi/2$ beat length $L_x$ is 5.53mm. The optimal design of Bragg grating with the same sine-apodisation profile and reflectivity of 45 dB is found using the method outlined in Figure 6 as follows. For a sine-apodised Bragg grating with a reflectivity of 45 dB, the penetration slope, accordingly to the engineering curves shown in Figure 5, is $a$=0.17. The optimum grating length calculated by Grating Length Equation is therefore $L_g$=16.755 mm. The required refractive index modulation to achieve a reflectivity of 45 dB with this grating length can be calculated and is found to be 2.7 $10^{-4}$ (p-p). With these Bragg grating characteristics, symmetric inscription of the grating into the centre of the coupler waist again forms an optimised full-cycle OADM. The full spectral response of this OADM is shown in Figure 10. This figure will be understood from the description of Figure 9 above. As expected, the spectral characteristics are very similar to that of Figure 9, but the bandwidth is narrower since the deployed grating is longer and with a smaller refractive index modulation.

As demonstrated by our proposed design algorithm, for a given full-cycle coupler structure, there is a unique relation between the reflectivity of the deployed Bragg grating and its physical length. Consequently, non-optimum design and positioning of the grating into the coupler waist leads to degraded device performance.

Degraded performance of the FCC OADM due to inscription of a non-optimised grating, can be demonstrated by two examples. We consider the OADM device corresponding to the calculated response spectra shown in Figure 9. The deployed grating is sine apodised, has a reflectivity of 45 dB, and, accordingly to the proposed design method, the optimal physical length is 4.5 mm.

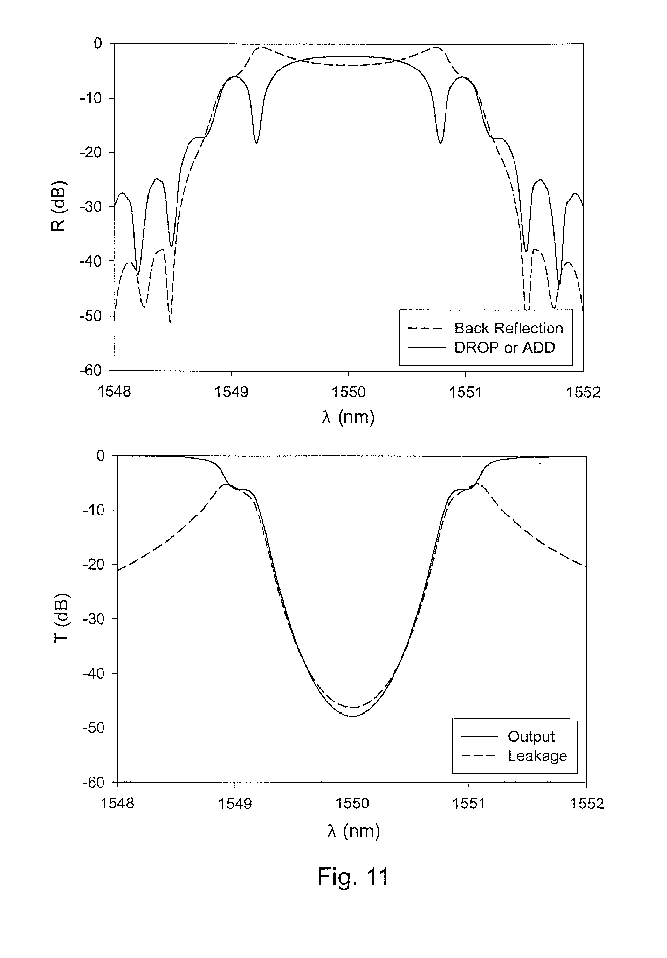

In a first example of a degraded FCC OADM, we form the OADM device by deploying a grating with reflectivity 45 dB but a length of only 2.5 mm. The full spectral response is shown in Figure 11. This figure will again be understood form the description of Figure 9 above, although the even and odd mode reflection spectra of the grating are not shown. There is a loss of $\sim$ -3dB for the drop/add action and strong back reflections at the input port.

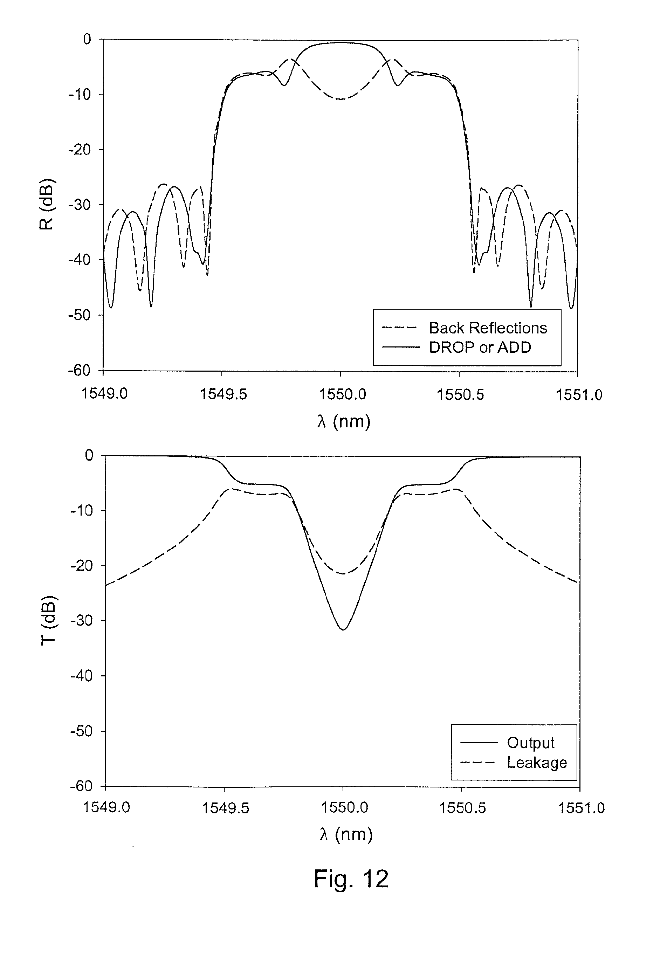

In the second example of a degraded FCC OADM, we form the OADM device by deploying a grating with the optimised length of 4.5 mm but with a reflectivity of only 25 dB. The full response of the device is shown in Figure 12. This figure will again be understood form the description of Figure 9 above, although the even and odd mode reflection spectra are not shown. The degraded characteristics are again apparent. The drop or add action exhibits a response with a much higher '3dB/20-dB' bandwidth ratio, which implies a very poor bandwidth utilisation factor in this particular non-optimised configuration.

The performance degradation arising from incorrectly matched gratings shown in Figures 11 and 12 highlights the importance of the design method outlined in Figure 6. Additionally, the fabrication of interferometric based OADMs requires accurate control for the proper inscription of the grating into the uniform coupling region. The precise characterisation of the coupler can be useful for the successful inscription of the grating and the implementation of the device. An effective nondestructive coupler characterisation technique applied to fibre couplers has recently been proposed for this purpose [11].

Having compared the discrete device performance of typical HCC and FCC OADMs, we now compare how their different characteristics affect the overall performance of typical WDM systems.

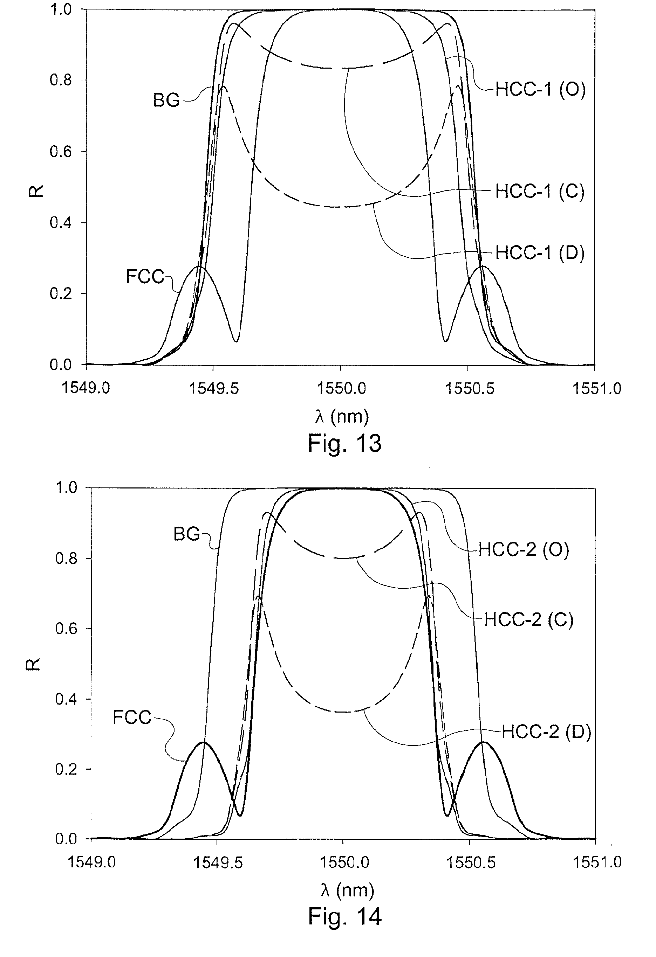

Figure 13 shows the response curves representing the optimised, compromised and degraded actions for the HCC OADM and the grating reflectivity as have already been shown in Figure 8, these are labelled HCC-1 (O), HCC-1 (C), HCC-1 (D) and BG respectively. Also shown in Figure 13 is the response curve representing the action of the optimised FCC OADM, this is labelled FCC. By overlaying the response curves of the HCC OADM and the FCC OADM, the difference in bandwidth between the two devices is apparent. The HCC OADM has a bandwidth of about 1 nm, whilst the bandwidth of the FCC OADM is narrower, about 0.7 nm. To provide a more direct comparison of the system performance of the HCC and FCC configurations, a second HCC OADM is designed to more closely match the 0.7 nm bandwidth of the FCC device. This second device is referred to as HCC-2 and the previous device as HCC-1.

The HCC-2 OADM is formed in the same host half-cycle coupler used for the HCC-1 OADM, but the Bragg grating now has a length $L_g$=5.2 mm, an amplitude of refractive index modulation $\Delta n$=3.65x10$^{-4}$ and sine-apodisation profile. These parameters provide a 3dB bandwidth for the HCC-2 OADM of $\sim$0.7 nm to allow the study of its performance at 40Gb/s operation speed to be directly compared with that of the 0.7 nm bandwidth FCC OADM.

Figure 14 shows the response curves representing the optimised, compromised and degraded actions for the HCC-2 OADM and also the grating reflectivity, these are labelled HCC-2 (O), HCC-2 (C), HCC-2 (D) and BG respectively. Also shown in Figure 14 is the response curve representing the action of the optimised FCC OADM and this is labelled FCC. The similar bandwidths of the FCC OADM and the HCC-2 OADM are apparent.

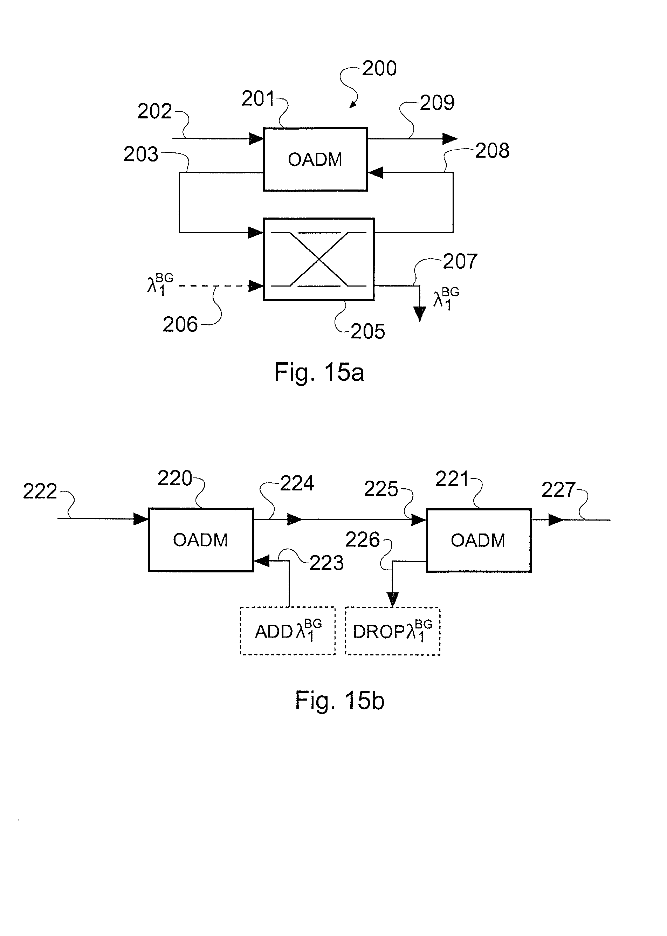

Figure 15a and Figure 15b schematically represent some basic add/drop functions which might occur in a typical WDM network. Figure 15a shows a single-channel network node 200 whereby a separate WDM channels can be added and/or dropped, or a single channel can experience a cascaded drop-and-add action depending on the position of a switch 205. In operation, a WDM stream enters an OADM 201 within the node 200 via an input 202 and a single channel at the active wavelength $\lambda_1^{BG}$ of the OADM 201 enters the node 200 at an input 206. A WDM channel at $\lambda_1^{BG}$ is dropped from the WDM stream presented to the OADM 201 to an output 203. With the switch 205 in a cross position, the dropped channel is passed to an output 207 from the node 200. At the same time, the channel entering the node 200 at the input 206 is passed to the OADM 201 at an input 208 and is added to the ongoing WDM stream which exits the node 200 at output 209. With the switch in the bar position, the channel dropped from the WDM stream at output 203 is routed directly to the input 208 and simply re-added to the WDM stream exiting the node 200 at output 209, at the same time the channel entering the node 200 at input 206 bypasses the OADM 201 and exits the node at output 207. Accordingly, the dropped channel can be transmitted to the node's final user via output 207 (cross state of switch 205) or, through a bypass operation (bar state of switch), can be re-added to the WDM stream in a two-stage cascaded action in the single OADM 201.

Figure 15(b) schematically shows an add and drop cascaded operation which can occur in different nodes of a WDM network. A WDM stream enters an OADM 220 at an input 222. A single channel at the active wavelength $\lambda_1^{BG}$ of the OADM 220 is presented to an input 223 to be added to the WDM stream which exits the OADM 220 at output 224. This output WDM stream enters a second OADM 221, which is again active at a wavelength of $\lambda_1^{BG}$, via an input 225. The channel at $\lambda_1^{BG}$ is dropped from the WDM stream by the OADM 221 and exits at an output 226. The ongoing WDM stream exits the OADM 221 at an output 227. This combined action of two OADMs 220, 221 provides a function whereby a particular WDM channel is added in one node and dropped in another node of the network.

We can characterise the behaviour of various FCC OADM and HCC OADM based functions, such as those shown in Figures 15a and 15b, by a simulated Intensity Modulation / Direct Detection system (IM/DD), which follows the SONET standards, and the system performance is characterised by estimating the eye-opening penalty (EOP).

We first compare the different performances of the optimised, compromised and degraded configurations of the HCC-2 OADM with a 40 Gb/s NRZ signal.

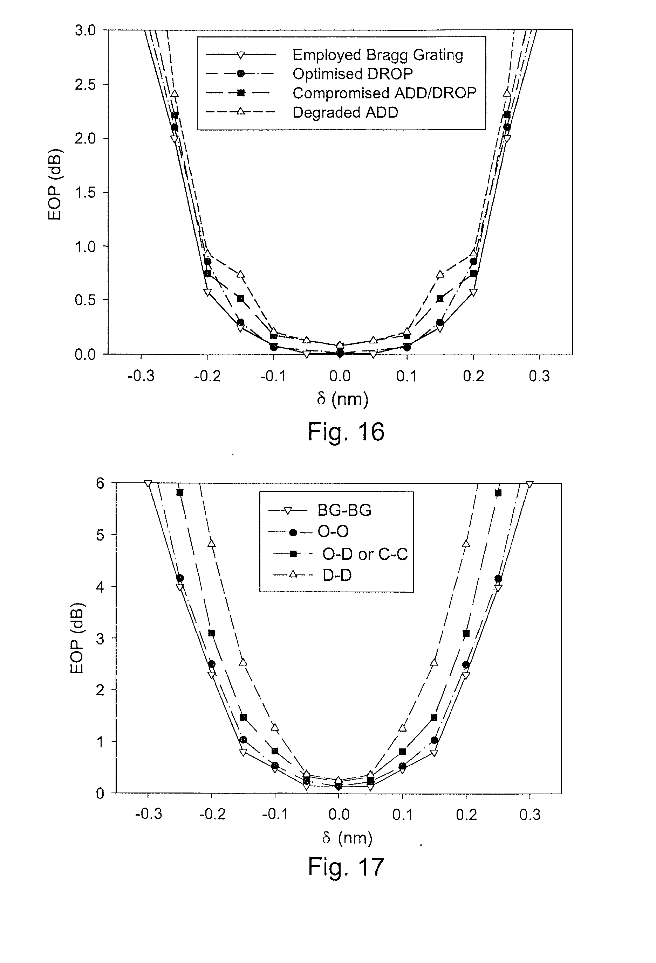

Figure 16 shows the EOP for a single add or drop action as a function of the grating - signal spectrum misalignment $\delta$. Curves representing the optimised drop action, the compromised add/drop action and the degraded add action as well as the employed Bragg grating are shown as indicated by the legend in Figure 16.

Figure 17 shows the same effect as shown in Figure 16, but for a two-stage cascade add and drop operation with HCC OADMs, such as in the process shown in Figure 15b. Depending on the relative orientation of the HCC OADMs in the two different nodes, different add and drop combinations such as O-O, O-D, C-C, or even D-D can occurs and the EOP of each, along with that of the grating, as a function of the grating - signal spectrum misalignment $\delta$ are shown as indicated by the legend in Figure 17. It is clear from Figures 16 and 17 that there is a significant EOP arising from the deployment of non-optimised OADM configurations compared to the spectrally flat-top ones.

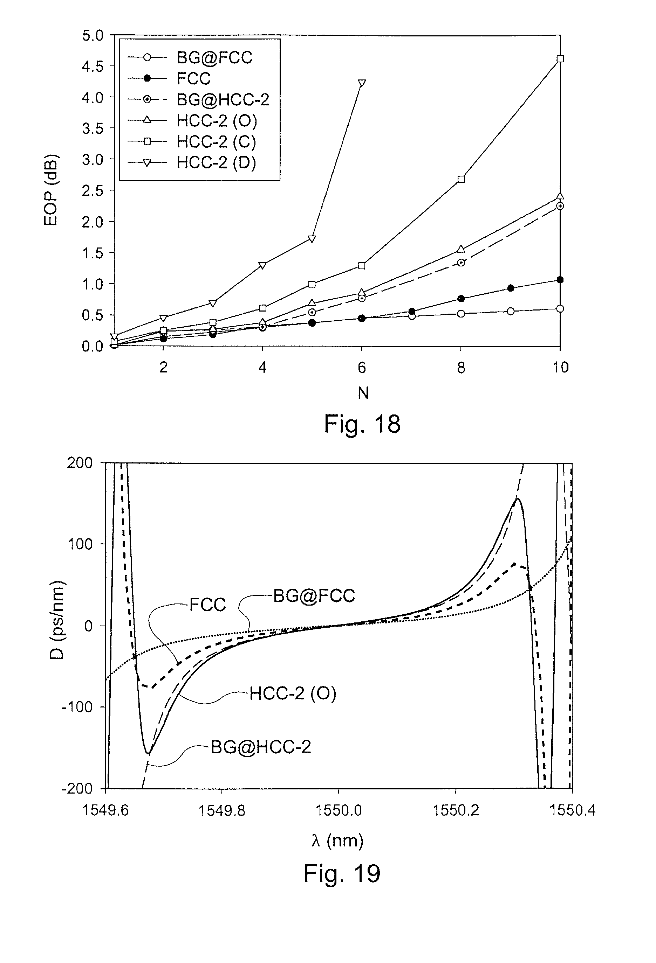

We now compare the performance of the HCC-2 OADM and the FCC OADM with different levels of cascading. Figure 18 shows the EOP of the FCC and HCC-2 OADMs as a function of the number N of cascaded OADMs. The EOP of cascaded FCC, optimised HCC-2, compromised HCC-2 and degraded HCC-2 are shown as indicated by the legend in Figure 18. Also shown are two curves representing the performance of the deployed Bragg gratings, labelled BG@FCC and BG@HCC-2, these have 1nm and 0.79 nm 3dB bandwidths respectively. It is clear that the deployment of the spectrally degraded configurations of the HCC OADM (HCC-2 (C) and HCC-2 (D)) results in much higher EOP compared to the optimised case of the HCC-2 OADM. It can also be seen from Figure 18 that the FCC OADM, despite its identical bandwidth with the HCC-2 OADM, exhibits lower EOP. This can be explained by the in-band dispersion characteristics of the different OADMs.

Figure 19 shows the in-band dispersion characteristics of the different OADMs. The dispersion D is shown as a function of wavelength $\lambda$ for the FCC OADM, the HCC-2 OADM in optimised configuration, the Bragg grating deployed in the FCC OADM and the Bragg grating deployed in the HCC-2 OADM and labelled FCC, HCC-2 (O), BG@FCC and BG@HCC-2 respectively. Within the 3dB bandwidth, the FCC OADM is seen to exhibit less dispersion variation than the HCC-2 OADM. This difference is due to the different characteristics of the deployed gratings. The longer Bragg grating in the case of the HCC-2 OADM, which is required to provide the specified bandwidth, is associated with stronger in-band dispersion [12], compared with the grating in the FCC OADM.

In addition to increased EOP, the larger insertion losses for the HCC OADM degraded and compromised configurations, as shown in Figures 13 and 14, also leads to significant cascade system losses.

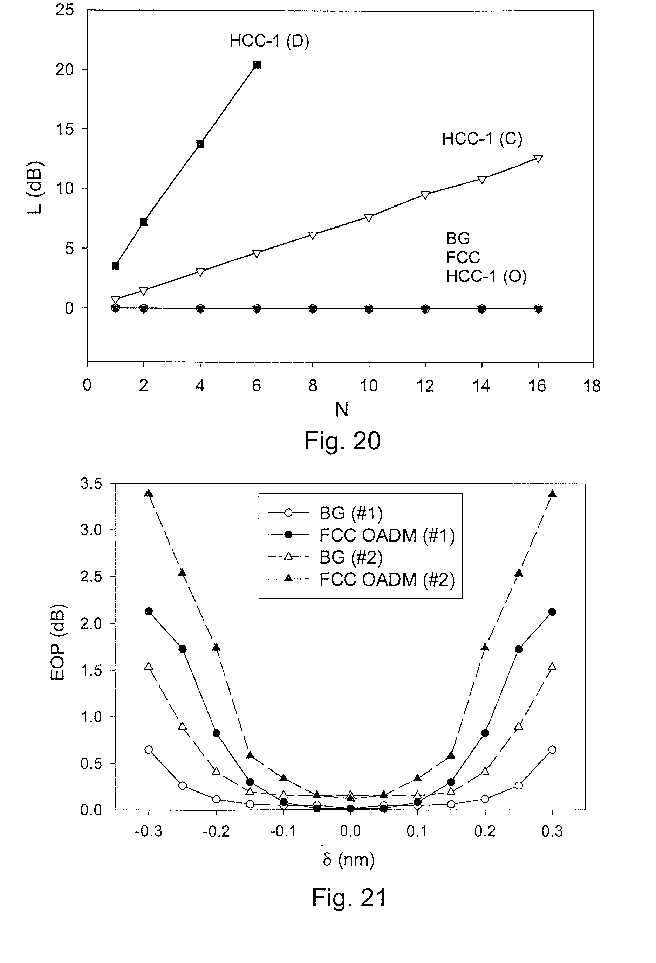

Figure 20 is a graph showing the total insertion loss L arising from a cascade of add/drop actions as a function of the number of cascaded actions N. Curves are shown for a cascade of HCC-1 OADM degraded actions, a cascade of HCC-1 OADM compromised actions, a cascade of HCC-1 OADM optimised actions, a cascade of FCC OADM actions as well as a series of direct grating reflections. These are labelled HCC-1 (D), HCC-1 (C), HCC-1 (O), FCC and BG respectively. The losses associated with the compromised and degraded HCC OADM configurations are much larger than those of the optimised HCC OADM and the FCC OADM.

Figure 21 shows the effect of the FCC OADM's low bandwidth utilisation of the deployed grating as seen in Figure 13. System simulation is again used to determine the EOP as a function of the grating - signal spectrum misalignment $\delta$ for both a single add or drop action and a two stage cascade action (add and drop). The EOP of the deployed grating is also determined in each case. The four curves are indicated in the legend of Figure 21 as FCC OADM (#1), FCC OADM (#2), BG(#1) and BG(#2) respectively. Due to the broader bandwidth of the deployed Bragg grating, the exhibited EOP is lower for the grating alone than for the FCC OADM. However for misalignments within the range $\pm0.1$nm, the EOP curves are all reasonably flat at a level below 0.5 dB. Within this range of misalignment, the second cascade induces an additional EOP of about 0.2 dB.

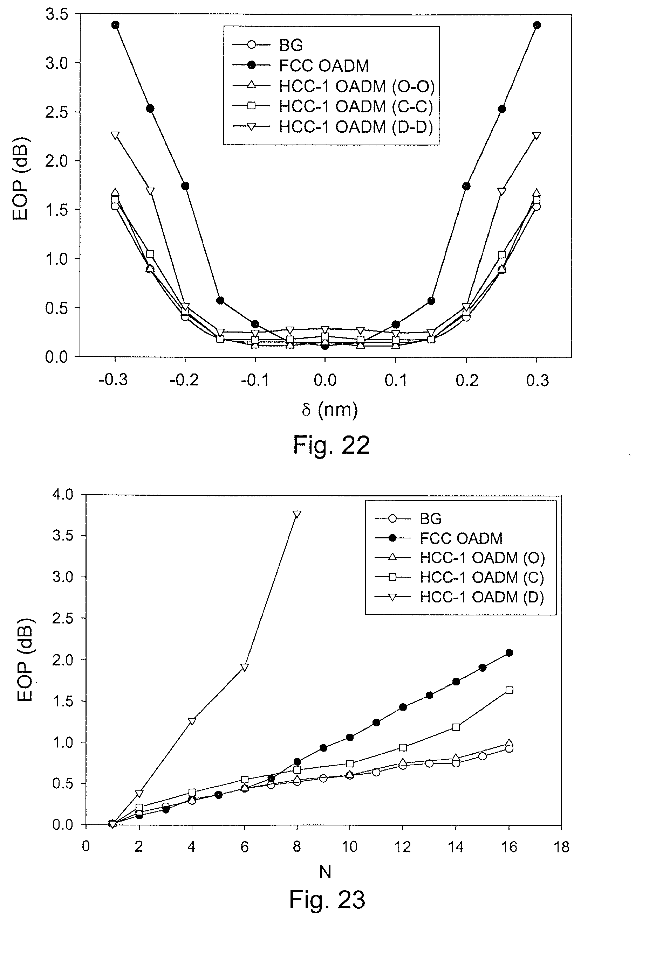

Figure 22 shows the estimated EOP curves for a two stage cascade action with the HCC-1 OADM in an optimised, compromised and degraded configuration, along with those of the FCC OADM and the common grating as a function of the grating-signal spectrum misalignment $\delta$. The curves are indicated in the legend of Figure 22 as HCC-1 OADM (O-O), HCC-1 OADM (C-C), HCC-1 OADM (D-D), FCC OADM and BG respectively. Despite its narrower bandwidth, the FCC OADM exhibits performance over the misalignment range $\pm$ 0.1 nm which is comparable to, or even better than, the differently configured HCC OADMs.

Figure 23 shows the EOP of the HCC-1 OADM in optimised, compromised and degraded configurations, and those of the FCC OADM and the commonly deployed grating as a function of number of stages N in a cascade. The curves are indicated in the legend of Figure 23 as HCC-1 OADM (O), HCC-1 OADM (C), HCC-1 OADM (D), FCC OADM and BG respectively. For each curve, the EOP is estimated for 40 Gb/s operation with the cascaded OADMs considered to be perfectly matched both to each other and to the signal spectrum. The EOP for the optimised HCC-1 OADM configuration closely follows that of the deployed grating. The EOP for the degraded HCC-1 OADM configuration is much worse. With up to eight cascades, the EOP of the FCC OADM is comparable to that of the HCC-1 OADM in either the optimised or compromised configuration. Beyond eight cascades, the EOP of the FCC OADM becomes larger than those of the optimised and compromised HCC-1 OADM configurations. However, a cascade of HCC OADMs in an optimised configuration provides very inflexible network due to the inability of each HCC OADM to deal with add and drop actions simultaneously, and a cascade of HCC OADM in a compromised configuration causes a much higher insertion loss as seen in Figure 20. As an example, with sixteen cascades, the insertion loss of the compromised HCC OADM configuration is around -15 dB. This makes the overall performance and flexibility of a FCC OADM based network much greater than that of a conventional HCC OADM.

The OADMs of the invention are now described in a systems context, with examples of transmission system and optical network usage being given.

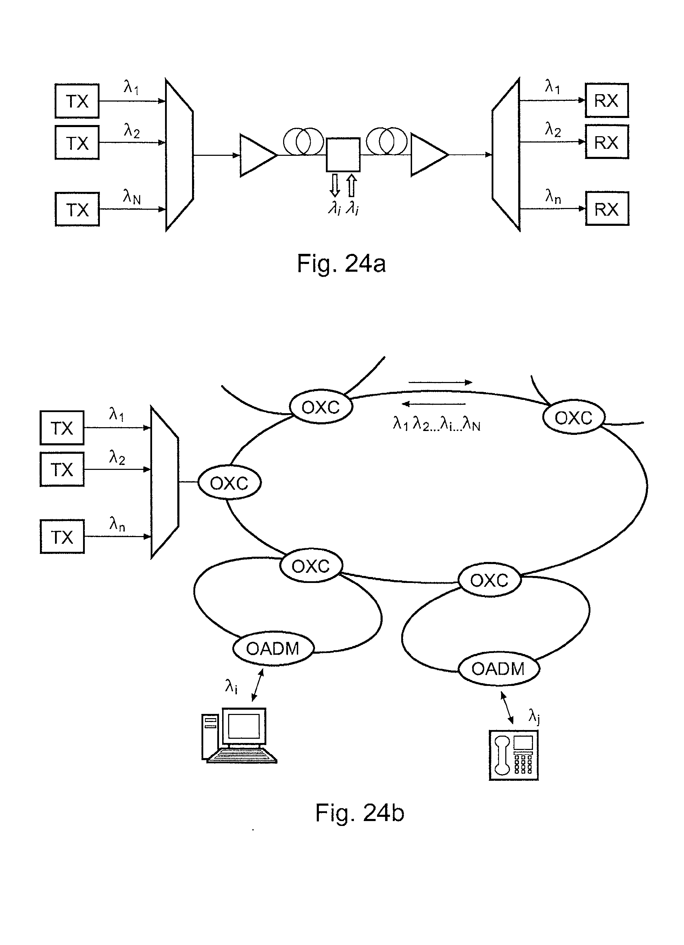

Figure 24a shows an OADM unit according to the invention in a transmission system in the form of a point-to-point N-channel WDM link. The link may be a long haul trunk line, for example. The link may be subsea or terrestrial. A bank of N transmitters TX is arranged to deliver N signals, one at each of the WDM channel wavelengths $\lambda_1 ..... \lambda_N$ to a wavelength division multiplexer which launches the multiplexed signal into a link. The link will typically be a fibre link, although a free space link may be used in part. The link may include in-line optical amplifiers, two of which are shown. Dispersion management components may also be included in the link, at the transmitter and/or the receiver, for example chirped fibre Bragg gratings (not shown). At an intermediate point in the link, there is shown an OADM unit according to the invention for adding a WDM channel $\lambda_i$ and dropping the same channel. The OADM unit may be as described with reference to Figure 15a or 15b. The link terminates in a wavelength division demultiplexer at the receiver which separates the WDM channels and delivers them to a bank of N receivers RX. Although only one OADM unit is shown, it will be understood that a bank may be included in series or in parallel providing for the add/dropping of two or more of the WDM channels. Such and OADM bank may provide capability for add/dropping all channels.

Figure 24b shows OADMs according to the invention in an optical network. A ring is shown comprising a number of bi-directional links between nodes defined by optical cross-connects OXCs. In the upper part of the figure, two of the OXCs are shown connected to other rings. to the left of the figure, an OXC is shown that is connected to receive a WDM input signal from a WDM transmitter. The WDM transmitter comprises a bank of transmitters TX connecting arranged to deliver N signals, one at each of a plurality of WDM channel wavelengths $\lambda_1 ..... \lambda_N$ to a wavelength division multiplexer which transmits the multiplexed signal into the OXC and thus the ring. In the lower part of the figure, two OXCs are shown which connect to respective subscriber rings including one or more OADM units. In the figure, one OADM unit is shown for each example ring for add/dropping channels $\lambda_i$ and $\lambda_j$ respectively, for a personal computer (PC) and a telephone for example. The OADM units may be as described with reference to Figure 15a or 15b.

Although the invention has been described in detail above in terms of specific examples, variations are possible, some of which are now discussed. While the first embodiment is directed towards a full-cycle coupler (FCC), it will be understood that the invention may in principle be embodied in any higher order multiple-half-cycle coupler, such as 3/2, 4/2, 5/2 etc.. The second embodiment described above gave a detailed description of one higher order example, namely a 5/2 cycle coupler based OADM. As will be understood from the above description, there are practical limits to the maximum number of half cycles that can be incorporated in a working device embodying the invention related to an interplay of several parameters including grating strength R, grating length $L_g$ and coupling region length $L_w$.

Moreover, the embodiments described above all relate a four port coupler based on two interacting waveguides. It will be understood that in principle a greater number of ports could be used, for example a six port coupler based on three interacting waveguides.

The detailed description has given examples in which the waveguides are formed from optical fibres, the coupling region being fabricated by fusing two optical fibres. However, it will be understood that other types of waveguides may be used, most especially planar waveguides. Planar waveguide embodiments of the invention may be fabricated in semiconductor material, most notably III-V semiconductor systems such as GaAlAs or InP based systems. Planar waveguide embodiments of the invention may alternatively be fabricated in lithium niobate. As well as lithium niobate, further examples of suitable materials are lithium tantalate, sodium barium niobate, strontium barium niobate, potassium titanyl niobate (KTN), potassium titanyl phosphate, rubidium titanyl arsenate, isomorphs of KTP, RTA, barium titanate, and potassium titanate.

## References

[1] K. P. Jones, M. S. Chadry, D. Simeonidou, N. H. Taylor, P. R. Morkel, "Optical wavelength add-drop multiplexer in installed submarine WDM network," Electronics Letters, Vol. 31, No. 24, pp. 2117-2118. Nov. 1995.

[2] D. C. Johnson, K. O. Hill, F. Bilodeau, and S. Faucher, "New design concept for a narrowband wavelength-selective optical tap and combiner," Electronics Letters, Vol. 23, pp. 668-669, 1987.

[3] F. Bilodeau, D. C. Johnson, S. Theriault, B. Malo, J. Albert, K. O. Hill, "An all-fibre dense-wavelength-division multiplexer/demultiplexer using photoimprinted Bragg gratings," IEEE Photonics Technology Letters, Vol. 7, No. 4, pp. 388-390, Apr. 1995.

[4] J. Albert, F. Bilodeau, D. C. Johnson, K. O. Hill, K. Hattori, T. Kitagawa, Y.Hibino and M. Abe, "Low-loss planar lightwave circuit OADM with high isolation and no polarization dependence," IEEE Photonics Technology Letters, Vol. 11, No. 3, pp. 346-348, Mar. 1999.

[5] T. Erdogan, T. A. Strasser, M. A. Milbrodt, E. J. Laskowski, C. H. Henry, and G. E. Kohnke, "Integrated-Optical Mach-Zehnder add-drop filter fabricated by a single UV-induced grating exposure," Applied Optics, Vol. 36, pp. 7838-7845, 1997.

[6] R. Kashyap, G. D. Maxwell, and B. J. Ainslie, "Laser-Trimmed four-port bandpass filter fabricated in single-mode photosensitive Ge-doped planar waveguide," IEEE Photonics Technology Letters, Vol. 5, no. 2, pp. 191-194, Feb. 1993.

[7] K. Bakhti, P. Sansonetti, C. Sinet, L. Gasca, L. Martineau, S. Lacroix, X. Daxhelet, F. Gonthier, "Optical add-drop multiplexer based on UV written Bragg gratings in a fused 100% coupler," Electronics Letters, Vol. 33, No. 9, pp. 803-804, Apr. 1997.

[8] F. Bakhti, X. Daxhelet, P. Sansonetti, S. Lacroix, "Influence of Bragg grating location in fused 100% coupler for add and drop multiplexer realization,"OFC 98, Technical Digest, ThQ2, pp. 333-334, 1998.

[9] C. Riziotis, P.G.R. Smith, M.N. Zervas, "Performance characteristics of interferometric Bragg grating based OADMs in WDM transmission systems," paper BThC2, in Technical Digest of OSA International Conference in Bragg Gratings, Photosensitivity and Poling in Glass Waveguides, BGPP 2001, Stresa, Italy, July 4-6 2001.

[10] E. Marin, R. Ghosh, J.-P. Meunier, X. Daxhelet, S. Lacroix, "Bragg gratings in 2x2 symmetric fused fibre couplers: influence of the tilt on the wavelength response," IEEE Photon. Technol. Lett. vol. 11, pp. 1434-1436, 1999.

[11] C. Alegria, F. Ghiringhelli, M. N. Zervas, "Non-destructive characterization of fibre couplers," paper We.L.2.3, Proc. ECOC '01, Amsterdam, Sep. 30-Oct.4, 2001.

[12] M. Ibsen, H. Geiger, R. I. Laming, "In-band dispersion limitations of uniform apodised fibre gratings," in Proc. *ECOC '98* paper WdA16, Madrid Spain 20-24 Sep, 1998.

[13] Kogelnik, "Filter response of non-uniform almost-periodic structures," Bell Systems Technical Journal, vol. 55, pp. 109-126, 1976.

[14] WO 99/06864 (PCT/US98/15328)

**Claims**

1. An optical add drop multiplexer comprising a waveguide coupler with at least four ports interconnected by a coupling region, wherein the coupling region has a length corresponding to the lowest order even and odd normal modes of the waveguide coupler developing a phase difference sufficient to provide at least first and second points at which the lowest order even and odd normal modes are $j\pi/2$ out of phase, where $j$ is an odd integer, and wherein a Bragg grating is incorporated in the coupling region across the at least first and second points so that add and drop signals inserted into the waveguide coupler in opposed directions are reflected at or about respective ones of the at least first and second points.

2. An optical add drop multiplexer according to claim 1, wherein the Bragg grating is arranged centrally with respect to the coupling region.

3. An optical add drop multiplexer according to claim 1 or 2, wherein the Bragg grating is confined to the coupling region.

4. An optical add drop multiplexer according to claim 1, 2 or 3, wherein the Bragg grating includes apodisation.

5. An optical add drop multiplexer according to claim 4, wherein the apodisation has a sine form.

**6.** An optical add drop multiplexer according to claim 4, wherein the apodisation has a raised cosine form.

**7.** An optical add drop multiplexer according to any one of the preceding claims, wherein the length of the coupling region corresponds to the lowest order even and odd normal modes of the coupler developing a phase difference of at least $m\pi$ along the length of the coupling region, where m is an integer of at least two, so as to provide m points at which the lowest order even and odd normal modes are $j\pi/2$ out of phase.

**8.** An optical add drop multiplexer according to claim 7, wherein m is equal to one of 2, 3, 4, 5, 6, 7, 8, 9 and 10.

**9.** An optical add drop multiplexer according to any one of claims 1 to 8, wherein the waveguide coupler is implemented with at least first and second optical fibres and the coupling region is formed by fusing the at least first and second optical fibres.

**10.** An optical add drop multiplexer according to any one of claims 1 to 8, wherein the waveguide coupler is implemented on a planar substrate with at least first and second planar waveguides and the coupling region is formed by the at least first and second planar waveguides extending alongside one another.

**11.** An optical transmission system including at least one optical add drop multiplexer according to any one of claims 1 to 10.

**12.** An optical network including at least one optical add drop multiplexer according to any one of claims 1 to 10.

Fig. 1a

Fig. 1b

Fig. 2

48

51      53      52

$L_c$

$L_w$

$M_1$      $M_2$

31   55   50   56   35   33

40

36

42

32   $L_1$ $L_p$    $L_p$ $L_1$   34

$L_2 = L_g$

Fig. 3a

F

$P_1$

Lx

1

$M_1$     $M_2$

$P_2$

0

x

Fig. 3b

$\Delta\phi_{eo}$   0    $\pi/2$    $\pi$    $3\pi/2$    $2\pi$

Even

+     +     +

Odd

Fig. 3c

$P_1$

$P_1$

Fig. 4

Fig. 5

Fig. 6

Fig. 7

Fig. 8

Fig. 9

Fig. 10

Fig. 11

Fig. 12

Fig. 13

Fig. 14

Fig. 15a

Fig. 15b

Fig. 16

Fig. 17

Fig. 18

Fig. 19

Fig. 20

Fig. 21

Fig. 22

Fig. 23

Fig. 24a

Fig. 24b

# EP 1 359 444 A1

## European Patent Office

## EUROPEAN SEARCH REPORT

Application Number

EP 02 25 3113

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | OFUSA N ET AL: "AN OPTICAL ADD-DROP MULTIPLEXER WITH A GRATING-LOADED DIRECTIONAL COUPLER IN SILICA WAVEGUIDES" IEICE TRANSACTIONS ON COMMUNICATIONS, INSTITUTE OF ELECTRONICS INFORMATION AND COMM. ENG. TOKYO, JP, vol. E82-B, no. 8, August 1999 (1999-08), pages 1248-1251, XP001033216 ISSN: 0916-8516 * the whole document * --- | 1-12 | G02B6/34 G02B6/12 H04J14/02 |
| X | JP 11 052153 A (NEC CORP) 26 February 1999 (1999-02-26) * the whole document * & US 6 226 428 A (NEC CORP) * the whole document * --- | 1-12 | |
| A | BAUMANN I ET AL: "COMPACT ALL-FIBER ADD-DROP-MULTIPLEXER USING FIBER BRAGG GRATINGS" IEEE PHOTONICS TECHNOLOGY LETTERS, IEEE INC. NEW YORK, US, vol. 8, no. 10, 1 October 1996 (1996-10-01), pages 1331-1333, XP000628949 ISSN: 1041-1135 * the whole document * --- | 1-10 | TECHNICAL FIELDS SEARCHED (Int.Cl.7) G02B H04J G02F |
| A | ORLOV S S ET AL: "COUPLED-MODE ANALYSIS OF FIBER-OPTIC ADD-DROP FILTERS FOR DENSE WAVELENGTH-DIVISION MULTIPLEXING" OPTICS LETTERS, OPTICAL SOCIETY OF AMERICA, WASHINGTON, US, vol. 22, no. 10, 15 May 1997 (1997-05-15), pages 688-690, XP000669408 ISSN: 0146-9592 * the whole document * --- -/-- | 1-10 | |

The present search report has been drawn up for all claims

| Place of search | Date of completion of the search | Examiner |
|---|---|---|
| MUNICH | 24 October 2002 | Frank, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

33

**European Patent Office**

## EUROPEAN SEARCH REPORT

Application Number

EP 02 25 3113

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ERDOGAN T: "FIBER GRATING SPECTRA" JOURNAL OF LIGHTWAVE TECHNOLOGY, IEEE. NEW YORK, US, vol. 15, no. 8, 1 August 1997 (1997-08-01), pages 1277-1294, XP000720450 ISSN: 0733-8724 * figure 2 * | 4-6 | |
| A | CHAWKI M J ET AL: "Wavelength reuse scheme in a WDM unidirectional ring network using a proper fibre grating add/drop multiplexer" ELECTRONICS LETTERS, IEE STEVENAGE, GB, vol. 31, no. 6, 16 March 1995 (1995-03-16), pages 476-477, XP006002593 ISSN: 0013-5194 * figure 1 * | 11,12 | |

TECHNICAL FIELDS SEARCHED     (Int.Cl.7)

The present search report has been drawn up for all claims

| Place of search | Date of completion of the search | Examiner |
|---|---|---|
| MUNICH | 24 October 2002 | Frank, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 25 3113

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2002

| Patent document cited in search report | Publication date | Patent family member(s) | | Publication date |
|---|---|---|---|---|
| JP 11052153 A | 26-02-1999 | JP | 3183223 B2 | 09-07-2001 |
| | | US | 6226428 B1 | 01-05-2001 |

For more details about this annex : see Official Journal of the European Patent Office, No. 12/82